# EUROPEAN PATENT SPECIFICATION

(11) **EP 4 216 364 B1**
(45) Date of publication and mention of the grant of the patent: **15.07.2026**
(21) Application number: 23152273.1
(22) Date of filing: 18.01.2023
(51) Int. Cl.: H01M 50/578, H01M 50/211, H01M 50/502, H01M 50/557

(54) **BATTERY MODULE, AND ELECTRICAL DEVICE**
BATTERIEMODUL UND ELEKTRISCHE VORRICHTUNG
MODULE DE BATTERIE ET DISPOSITIF ÉLECTRIQUE

(30) Priority: 21.01.2022 CN 202210074284
(43) Date of publication of application: 26.07.2023
(73) Proprietor: NINGDE AMPEREX TECHNOLOGY LIMITED, Ningde City, Fujian Province 352100 (CN)
(72) Inventor: ZHOU, Xiaojian, Dongguan City, Guangdong Province, People's Republic of China, 523000 (CN); HUANG, Silin, Dongguan City, Guangdong Province, People's Republic of China, 523000 (CN); XIA, Jun, Dongguan City, Guangdong Province, People's Republic of China, 523000 (CN); XIAO, Zhiwen, Dongguan City, Guangdong Province, People's Republic of China, 523000 (CN)
(74) Representative: Icosa

(56) References cited:
- EP-A1- 3 598 532
- EP-A2- 2 278 677
- KR-A- 20170 038 497
- US-A1- 2013 075 242

## Description

### TECHNICAL FIELD

This application relates to the technical field of battery protection, and in particular, to a circuit connection apparatus, a battery module, and an electrical device.

### BACKGROUND

A pouch power battery is very prone to thermal runaway after overcharging, thereby posing safety hazards. Existing technologies mainly detect voltage, temperature, gas, and the like by using a BMS. Once an abnormality is detected, the BMS controls a charging circuit to break, so as to prevent overcharging. However, this solution relies on BMS hardware for detection and control. If the detection hardware or control hardware fails, the overcharge protection function directly fails. Especially, when a user uses a non-standard charger, the control hardware is very prone to be broken down, rendering the charging circuit unable to break and causing a safety accident.

From EP 2 278 677 A2 there is known a battery module as defined in the preamble of claim 1.

### SUMMARY

The present invention is A a battery module, as defined in claim 1. The battery module includes a housing and a cell assembly. The cell assembly is accommodated in the housing. The battery module further includes the circuit connection apparatus described above. The circuit connection apparatus is electrically connected to the cell assembly. The battery module contains the circuit connection apparatus. Therefore, when the cell assembly expands to a specific degree, the boss and the third section press against each other to fracture the third section, thereby reducing the probability of overcharging of the cell and protecting the battery module.

In some examples, the cell assembly includes plurality of cells. The plurality of cells are stacked sequentially along the first direction. The circuit connection apparatus is disposed between two adjacent cells. With the circuit connection apparatus disposed between two adjacent cells, when a cell expands, the cell presses against the circuit connection apparatus, and the boss presses against the third section to fracture the third section, thereby electrically disconnecting the cell assembly.

In some examples, the cell assembly includes plurality of cells. The plurality of cells are stacked sequentially along the first direction. The circuit connection apparatus is disposed between an inner wall of the housing and the cell assembly along the first direction. The circuit connection apparatus is electrically connected to the cell assembly through the first section and the second section. With the circuit connection apparatus disposed between the cell and the inner wall of the housing, the cell coordinates with the housing to press against the circuit connection apparatus and make the first member and the second member approach each other. The boss on the second member presses and fractures the third section on the first member to cut off the electrical connection between the first section and the second section.

To achieve the foregoing technical objective, another technical solution put forward in an embodiment of this application is to provide an electrical device. The electrical device includes the battery module.

In the battery module, and electrical device according to this application, a first member and a second member are disposed. The first member includes a third section electrically connected to the first section and the second section. A boss is disposed on the second member. The first member and the second member can move closer to each other so that the boss and the third section are driven to press against each other to fracture the third section, thereby cutting off the electrical connection between the first section and the second section. When the circuit connection apparatus is electrically connected to the cell in the battery module through the first section and the second section, and when the circuit connection apparatus is disposed between the cells or between a cell and the inner wall of the housing of the battery module, the circuit connection apparatus is pressed to fracture the third section once the battery expands, thereby breaking the charging circuit and improving the safety of the battery.

### BRIEF DESCRIPTION OF DRAWINGS

One or more embodiments are described illustratively with reference to corresponding drawings. The illustrative description does not constitute any limitation on the embodiments. Components marked with the same reference numeral in the drawings represent similar components. Unless otherwise expressly specified, the drawings are not drawn to scale.
FIG. 1 is a schematic structural diagram of a circuit connection apparatus according to an embodiment of this application;
FIG. 2 is an schematic exploded view of a structure of a circuit connection apparatus according to an embodiment of this application;
FIG. 3 is a schematic exploded view of a structure of a first member shown in FIG. 2;
FIG. 4 is a schematic structural diagram of a first section, a second section, and third section shown in FIG. 3;
FIG. 5 is a schematic structural close-up view of a second member shown in FIG. 2;
FIG. 6 is a schematic structural diagram of a third member according to another embodiment of this application;
FIG. 7 is a schematic structural diagram of coordination between a cell assembly and a circuit connection apparatus according to an embodiment of this application;
FIG. 8 is a schematic sectional view of a part of a battery module according to an embodiment of this application; and
FIG. 9 is a schematic sectional view of a part of a battery module according to another embodiment of this application.

### DETAILED DESCRIPTION OF EMBODIMENTS

To make the objectives, technical solutions, and advantages of this application clearer, the following describes this application in further detail with reference to drawings and some embodiments. Understandably, the specific some embodiments described herein are merely intended to explain this application, but not to limit this application.

It is hereby noted that to the extent that no conflict occurs, the features in different some embodiments of this application may be combined with each other to form a new technical solution that still falls within the protection scope of this application. In addition, although the apparatus is divided into different functional modules in the schematic diagram of the apparatus and the logical order is shown in the flowchart, the module arrangement may be different from what is shown in the schematic diagram of the apparatus, or the illustrated or described steps may be performed in order different from the order shown in the flowchart in some circumstances.

Unless otherwise defined, all technical and scientific terms used herein bear the same meanings as what is normally understood by a person skilled in the technical field of this application. The terms used in the specification of this application are merely intended to describe specific some embodiments but not to limit this application. The term "and/or" used herein is intended to include any and all combinations of one or more relevant items recited.

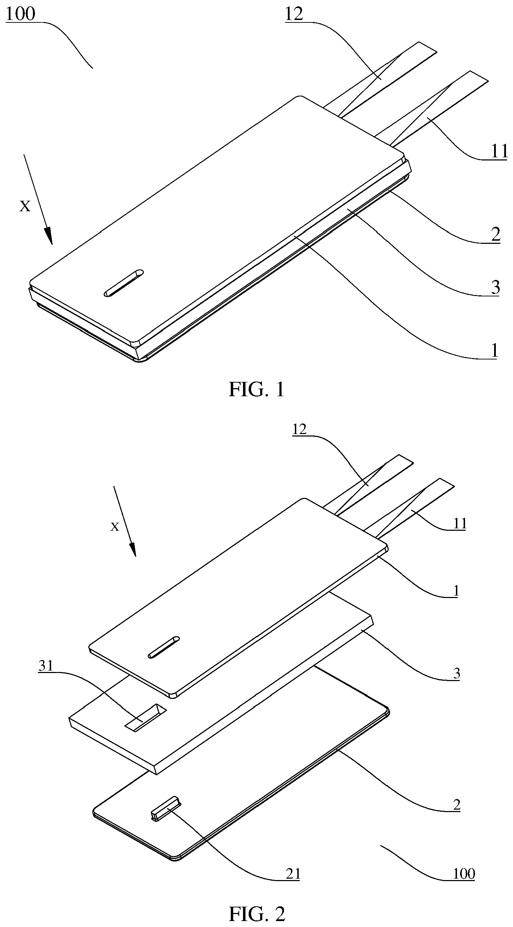

As shown in FIG. 1 to FIG. 3, an embodiment of this application provides a circuit connection apparatus 100. The circuit connection apparatus 100 includes a first member 1 and a second member 2 that are stacked sequentially along a first direction X. The first member 1 is connected to the second member 2. The first member 1 and the second member 2 can approach each other or move away from each other along the first direction X. When the circuit connecting apparatus 100 is put into a battery module, a cell of the battery module expands to press against the circuit connection apparatus 100, so as to make the first member 1 and the second member 2 approach each other.

In some embodiments, the first member 1 and the second member 2 are sheet-shaped.

In some embodiments, the first member 1 is connected to the second member 2 by a snap-fastener. The snap-fastener limits a distance between the first member 1 and the second member 2. The first member 1 and the second member 2 can move closer to or farther away from each other within the limited distance.

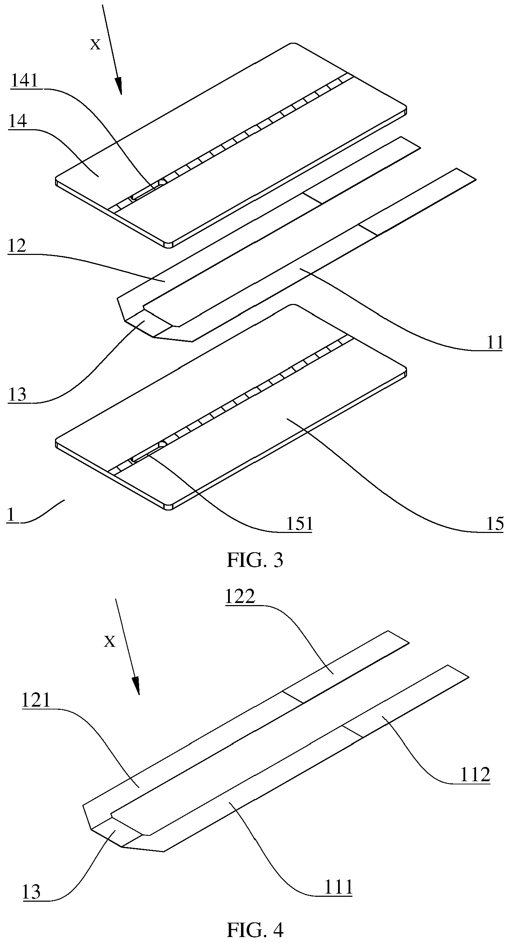

As shown in FIG. 3, with respect to the first member 1, the first member 1 is conductive. The first member 1 includes a first section 11, a second section 12, and a third section 13. The first section 11 and the second section 12 are spaced apart. The third section 13 is connected to the first section 11 and the second section 12 separately. The first section 11, the second section 12, and the third section 13 are all conductors, and are configured to be electrically connected to a cell in the battery module. When the third section 13 is fractured, a charging circuit of the cell can be broken, thereby reducing occurrences of thermal runaway of the cell and ensuring safety of the battery module and people around the battery module.

In some embodiments, the third section 13 is made of a fragile material.

In some embodiments, the first section 11, the second section 12, and the third section 13 are strip-shaped. The first section 11 is parallel to the second section 12. Two ends of the third section 13 are vertically connected to the first section 11 and the second section 12 respectively.

In some embodiments, the two ends of the third section 13 are connected to one end of the first section 11 and one end of the second section 12 respectively.

In some embodiments, the two ends of the third section 13 are connected to a middle part of the first section 11 and a middle part of the second section 12 respectively.

As shown in FIG. 2 and FIG. 3, with respect to the second member 2, the second member 2 includes a boss 21 extending toward the first member 1. Viewed along the first direction X, the boss 21 at least partly overlaps the third section 13. Along the first direction X, the boss 21 and the third section 13 are interspaced with a clearance. Along the first direction X, the first member 1 and the second member 2 are able to move closer to each other. The boss 21 is configured to be able to press against and be pressed by the third section 13 to fracture the third section 13, so as to cut off an electrical connection between the first section 11 and the second section 12.

Viewed along the first direction X, the boss 21 at least partly overlaps the third section 13. In this way, when moving closer to the third section 13 along the first direction X in relation to the third section 13, the boss 21 can contact the third section 13 to press and fracture the third section 13. When the first member 1 and the second member 2 are not subjected to an external force, the boss 21 and the third section 13 may be interspaced with a clearance to reduce the probability that the boss 21 presses against the third section 13 due to vibration, thermal expansion reactions or the like, thereby reducing the probability of unnecessary mistaken circuit interruptions and improving the reliability.

In some embodiments, the first member 1 includes a first insulating part 14. The first section 11, the second section 12, and the third section 13 are disposed in the first insulating part 14. Optionally, the first member 1 includes a second insulating part 15. The first section 11, the second section 12, and the third section 13 are disposed in the second insulating part 15. Optionally, the first member 1 includes a first insulating part 14 and a second insulating part 15. The first insulating part 14 and the second insulating part 15 are stacked along the first direction X and jointly clamp the first section 11, the second section 12, and the third section 13. One end of the first section 11 protrudes from the first member 1, and one end of the second section 12 protrudes from the first member 1. The first insulating part 14 and the second insulating part 15 are configured to clamp and fix the first section 11, the second section 12, and the third section 13. The first insulating part 14 and the second insulating part 15 are arranged along the first direction X. Along a direction perpendicular to the first direction X, one end of the first section 11 and one end of the second section 12 protrude from the first insulating part 14 and the second insulating part 15 to facilitate connecting to a connection bus of the cell.

As shown in FIG. 4, in some embodiments, the first section 11 includes a first connecting portion 111 disposed in the first insulating part 14 and a first extending portion 112 that extends out of the first insulating part 14. The second section 12 includes a second connecting portion 121 disposed in the first insulating part 14 and a second extending portion 122 that extends out of the first insulating part 14.

In some embodiments, the first insulating part 14 and the second insulating part 15 include an insulating material so as to be insulated from the first section 11, the second section 12, and the third section 13. The insulating material can enhance the effect of insulation from the first section 11, the second section 12, and the third section 13.

In some embodiments, the first insulating part 14 and the second insulating part 15 are made by injection molding. During the injection molding, the first section 11 and the second section 12 are partly located in an injection mold cavity, and the third section 13 is located in the injection mold cavity.

As shown in FIG. 3, in some embodiments, along the first direction X , a first through-hole 141 provided on the first insulating part 14 ,and/or a first through-hole 151 provided on the second insulating part 15, the third section 13 is at least partly exposed in the first through-hole 141/151. When the first through-hole 141/151 is provided on both the first insulating part 14 and the second insulating part 15, the first through-hole 141 and the first through-hole 151 overlap along the first direction X. When the first insulating part 14 and the second insulating part 15 fit closely with each other along the first direction X, the first through-hole 141 may communicate with the first through-hole 151. The third section 13 is at least partly exposed in the first through-hole 141/151. Viewed along the first direction X, the boss 21 is located in the first through-hole 141/151, and the first through-hole 141/151 is configured to enable the boss 21 to pass through the first through-hole and contact the third section 13 when the first member 1 is subjected to an acting force toward the second member 2 and/or when the second member 2 is subjected to an acting force toward the first member 1. Optionally, an inside diameter of the first through-hole 141/151 is greater than or equal to a width of the third section 13. In this way, when the boss 21 presses against the third section 13, the third section 13 can be caused to fracture in the middle part. Optionally, the first through-hole 141/151 is not made in the first insulating part 14 or the second insulating part 15, and the boss 21 can directly puncture the first insulating part 14 and/or the second insulating part 15.

In some embodiments, the third section 13 is fully exposed in the first through-hole 141/151. One end of the first section 11 and one end of the second section 12 extend into the first through-hole 141/151, and is electrically connected to the third section 13. In this way, when the boss 21 presses against the third section 13, the third section 13 is fractured or detached from at least one of the first section 11 or the second section 12.

In some embodiments, a rated pressure for fracturing the third section 13 may be adjusted by adjusting the inside diameter of the first through-hole 141/151; or, the rated pressure for fracturing the third section 13 may be adjusted by adjusting the material, thickness, and width of the third section 13. In this way, the technical solution is applicable to different battery modules or other diverse application scenarios.

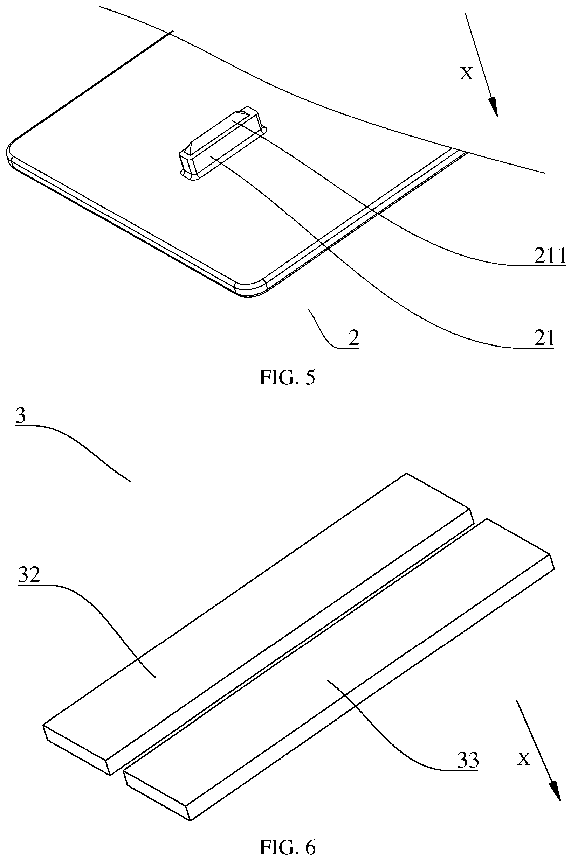

As shown in FIG. 5, in some embodiments, a spike portion 211 is disposed at an end that is of the boss 21 and that is oriented toward the first member 1. The spike portion 211 makes the stress more concentrated when the boss 21 presses against the third section 13, thereby making it easier to fracture the third section 13 and improving the reliability. Understandably, the rated pressure for fracturing the third section 13 may be adjusted by adjusting the shape of the spike portion 211, for example, by adjusting an extension length of the spike portion 211 and a taper angle of a tip of the spike portion 211. In this way, the technical solution is applicable to different battery modules or other diverse application scenarios.

In some embodiments, the spike portion 211 is a plurality of needle-like bulges spaced apart; or, the spike portion 211 is blade-shaped; or, the spike portion 211 is frustum-shaped.

As shown in FIG. 1 and FIG. 2, in some embodiments, the circuit connection apparatus 100 further includes a third member 3. Along the first direction X, the third member 3 is disposed between the first member 1 and the second member 2. In some embodiments, along the first direction X, the first member 1 and the second member 2 are affixed to two sides of the third member 3 respectively to implement connection between the first member 1 and the second member 2.

In some embodiments, the third member 3 is elastic so that the first member 1 and the second member 2 can approach each other or move away from each other.

In some embodiments, an insulating material is disposed on a side that is of the third member 3 and that is close to the first member 1. The insulating material can enhance the effect of insulation between the third member 3 and the first member 1.

In some embodiments, the third member 3 is made of an insulating material. In some embodiments, when the third member 3 is pressed by the boss 21, the boss 21 can puncture the third member 3.

As shown in FIG. 2, in some embodiments, a first hole 31 is provided on the third member 3. Viewed along the first direction X, the boss 21 is at least partly located in the first hole 31. That is, the boss 21 overlaps the first hole 31 to some extent. The first hole 31 is configured to enable the boss 21 to pass through the first hole and contact the third section 13 when the first member 1 is subjected to an acting force toward the second member 2 and/or when the second member 2 is subjected to an acting force toward the first member 1. Optionally, viewed along the first direction X, the boss 21 is located in the first hole 31. Along the first direction X, a contour of the first hole 31 is larger than a contour of the boss 21. The position of the first hole 31 corresponds to the position of the boss 21 so that the boss 21 can pass through the first hole 31 to contact, press and fracture the third section 13. Optionally, the first hole 31 runs through the third member 3 along the first direction. Optionally, the first hole 31 does not run through the third member 3 along the first direction.

As shown in FIG. 6, in some embodiments, the third member 3 includes a first part 32 and a second part 33, the first part and the second part are spaced apart from each other. Viewed along the first direction X, the first part 32 and the second part 33 are located on two sides of the boss 21 respectively. The boss 21 passes through the clearance between the first part 32 and the second part 33, so as to contact, press and fracture the third section 13.

In some embodiments, the third member 3 includes foam.

In some embodiments, the third member 3 includes a spring. The spring is supported between the first member 1 and the second member 2. The external rated pressure for fracturing the third section 13 may be adjusted by adjusting the number and specifications of the springs. In this way, the technical solution is applicable to different battery modules or other diverse application scenarios.

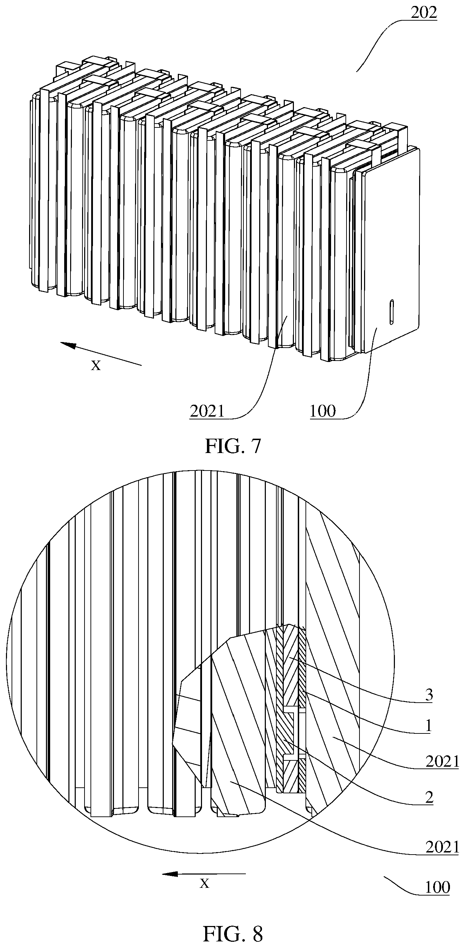

As shown in FIG. 7 to FIG. 9, an embodiment of this application further provides a battery module 200. The battery module 200 includes a housing 201, a cell assembly 202, and the circuit connection apparatus 100 described above. The cell assembly 202 is accommodated in the housing 201, and the circuit connection apparatus 100 is electrically connected to the cell assembly 202.

In some embodiments, the circuit connection apparatus 100 is in direct contact with the cell assembly 202.

As shown in FIG. 7 and FIG. 8, in some embodiments, the cell assembly 202 includes plurality of cells 2021. The plurality of cells 2021 are stacked sequentially along the first direction X. The circuit connection apparatus 100 is disposed between two adjacent cells 2021 (the outermost cell 2021 is not shown in FIG. 7). The first member 1 of the circuit connection apparatus 100 is connected to one cell 2021 among the two adjacent cells 2021. The second member 2 of the circuit connection apparatus 100 is connected to the other cell 2021 among the two adjacent cells 2021. The circuit connection apparatus 100 is electrically connected to the cell assembly 202 by the first section 11 and the second section 12. When a cell 2021 expands, the cell 2021 presses against the circuit connection apparatus 100, and the boss 21 presses against the third section 13 to fracture the third section 13, thereby electrically disconnecting the cell assembly 202.

In some embodiments, the first member 1 of the circuit connection apparatus 100 is in direct contact with one cell 2021 among the two adjacent cells 2021. The second member 2 of the circuit connection apparatus 100 is in direct contact with the other cell 2021 among the two adjacent cells 2021.

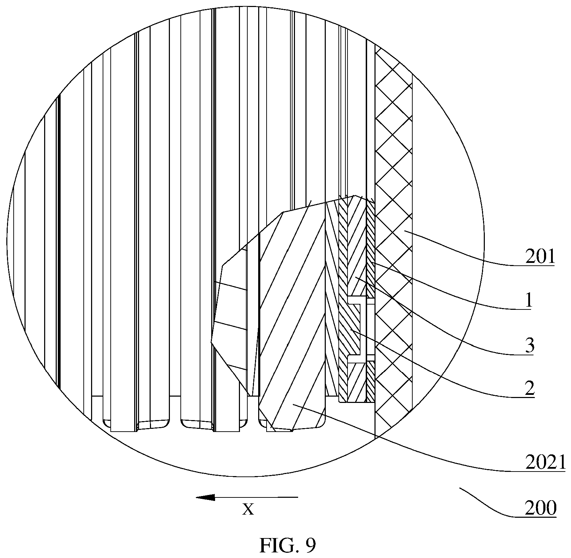

As shown in FIG. 7 and FIG. 9, in some embodiments, the circuit connection apparatus 100 is disposed between an inner wall of the housing 201 and the cell assembly 202. The circuit connection apparatus 100 is electrically connected to the cell assembly 202 by the first section 11 and the second section 12. When a cell 2021 expands, the cell 2021 coordinates with the housing 201 to press against the circuit connection apparatus 100 and make the first member 1 and the second member 2 approach each other. The boss 21 on the second member 2 presses and fractures the third section 13 on the first member 1 to cut off the electrical connection between the first section 11 and the second section 12, thereby reducing further damage to the battery and preventing accidents. In some embodiments, the first member 1 of the circuit connection apparatus 100 is in direct contact with one of the inner wall of the housing 201 or the cell assembly 202, and the second member 2 of the circuit connection apparatus 100 is in direct contact with the other of the inner wall of the housing 201 or the cell assembly 202.

In some embodiments, the cells 2021 include a pouch-type cell. Each cell 2021 includes a tab. The first section 11 and the second section 12 are electrically connected to the tabs of two cells 2021 respectively; or, one of the first section 11 or the second section 12 is electrically connected to the tab, and the other is electrically connected to a charging circuit of the cell 2021.

Another embodiment of this application provides an electrical device. The electrical device includes the battery module 200 described above. The electrical device is equipped with the circuit connection apparatus 100 described above, thereby being capable of reducing the hazards of thermal runaway of the battery and the battery module 200 and enhancing the safety of the electrical device.

In the circuit connection apparatus 100, battery module 200, and electrical device according to this application, a first member 1 and a second member 2 are disposed. The first member 1 includes a third section 13 electrically connected to the first section 11 and the second section 12. A boss 21 is disposed on the second member 2. The first member 1 and the second member 2 can move closer to each other so that the boss 21 and the third section 13 are driven to press against each other to fracture the third section 13, thereby cutting off the electrical connection between the first section 11 and the second section 12. When the circuit connection apparatus 100 is electrically connected to the cell 2021 in the battery module 200 through the first section 11 and the second section 12, and when the circuit connection apparatus 100 is disposed between the cells 2021 or between a cell 2021 and the inner wall of the housing of the battery module 200, the circuit connection apparatus 100 is pressed to fracture the third section 13 once the battery expands, thereby breaking the charging circuit.

## Claims

1. A battery module (200), comprising a housing (201), a cell assembly (202) and a circuit connection apparatus (100), wherein the cell assembly (202) includes plurality of cells (2021) stacked sequentially along a first direction (X) the cell assembly (202) is accommodated in the housing (201), wherein the circuit connection apparatus (100) is electrically connected to the cell assembly (202), wherein the circuit connection apparatus (100) comprises a first member (1) and a second member (2) sequentially stacked along the first direction (X); wherein
the first member (1) comprises a first section (11), a second section (12), and a third section (13); the first section (11) and the second section (12) are spaced apart, and the third section (13) is connected to the first section (11) and the second section (12) separately; wherein the first section (11), the second section (12), and the third section (13) are electrically conductive, the first section (11), the second section (12), and the third section (13) are electrically connected to one of the plurality of cells in the battery module;
the second member (2) comprises a boss (21) extending toward the first member (1); viewed along the first direction (X), the boss (21) at least partly overlaps the third section (13);
along the first direction (X), the boss (21) and the third section (13) are interspaced with a clearance, the circuit connection apparatus (100) is disposed between the housing (201) and the cell assembly (202), and the first member (1) and the second member (2) are configured to approach each other when any cell of the cell assembly (2021) expands and is pressed against the circuit connection apparatus (100), the boss (21) being configured to press against and to be pressed by the third section (13) to fracture the third section (13); and
**characterized in that**, the first member (1) comprises a first insulating part (14) and a second insulating part (15), the third section (13) is disposed on the first insulating part (14), the first section (11) comprises a first connecting portion (111) disposed on the first insulating part (14) and a first extending portion (112) extends out of the first insulating part (14), and the second section (12) comprises a second connecting portion (121) disposed on the first insulating part (14) and a second extending portion (122) extends out of the first insulating part (14); the first insulating part (14) and the second insulating part (15) are stacked along the first direction (X) and jointly clamp the first connecting portion (111), the second connecting portion (121), and the third section (13); the first insulating part (14) and the second insulating part (15) being electrically insulating;
one end of the first section (11) and one end of the second section (12) protruding from the first insulating part (14) and the second insulating part (15).

2. The battery module (200) according to claim 1, wherein the circuit connection apparatus (100) further comprises a third member (3); and, along the first direction (X), the third member (3) is disposed between the first member (1) and the second member (2).

3. The battery module (200) according to claim 2, wherein a first hole (31) is provided on the third member (3); and
viewed along the first direction (X), the boss (21) is at least partly located in the first hole (31), and the first hole (31) is configured to enable the boss (21) to pass through the first hole (31) and contact the third section (13) when the first member (1) is subjected to an acting force toward the second member (2) and/or when the second member (2) is subjected to an acting force toward the first member (1).

4. The battery module (200) according to claim 1, wherein a first through-hole (141,151) is provided on at least one of the first insulating part (14) or the second insulating part (15) along the first direction (X), and the third section (13) is at least partly exposed in the first through-hole (141,151); and
viewed along the first direction (X), the boss (21) is located in the first through-hole (141,151), and the first through-hole (141,151) is configured to enable the boss (21) to pass through the first through-hole (141,151) and contact the third section (13) when the first member (1) is subjected to an acting force toward the second member (2) and/or when the second member (2) is subjected to an acting force toward the first member (1).

5. The battery module (200) according to claim 1, wherein the first insulating part (14) and the second insulating part (15) comprise an electrically insulating material.

6. The battery module (200) according to any one of claims 1 to 3, wherein a spike portion (211) is disposed at an end of the boss (21) and oriented toward the first member (1).

7. The battery module (200) according to any one of claims 2 to 3, wherein the third member (3) is elastic.

8. The battery module (200) according to any one of claims 2 to 3, wherein an insulating material is disposed on a side of the third member (3) close to the first member (1).

9. The battery module (200) according to any one of claims 1 to 8, wherein the cell assembly (202) comprises plurality of cells (2021), the plurality of cells (2021) are stacked sequentially along the first direction (X), and the circuit connection apparatus (100) is disposed between two adjacent cells (2021).

10. The battery module (200) according to any one of claims 1 to 8, wherein the cell assembly (202) comprises plurality of cells (2021), the plurality of cells (2021) are stacked sequentially along the first direction (X), and the circuit connection apparatus (100) is disposed between an inner wall of the housing (201) and the cell assembly (202) along the first direction (X).

11. The battery module (200) according to any one of claims 1 to 8, wherein the cell (2021) is a pouch cell.

12. An electrical device, wherein the electrical device comprises the battery module (200) according to any one of claims 1 to 11.

## Patentansprüche

1. Batteriemodul (200), umfassend ein Gehäuse (201), eine Zellbaugruppe (202) und eine Schaltungsverbindungseinrichtung (100), wobei die Zellbaugruppe (202) eine Vielzahl von Zellen (2021) umfasst, die sequenziell entlang einer ersten Richtung (X) gestapelt sind, wobei die Zellbaugruppe (202) in dem Gehäuse (201) untergebracht ist, wobei die Schaltungsverbindungseinrichtung (100) elektrisch mit der Zellbaugruppe (202) verbunden ist, wobei die Schaltungsverbindungseinrichtung (100) ein erstes Element (1) und ein zweites Element (2) umfasst, die sequenziell entlang der ersten Richtung (X) gestapelt sind; wobei
das erste Element (1) einen ersten Abschnitt (11), einen zweiten Abschnitt (12) und einen dritten Abschnitt (13) umfasst; der erste Abschnitt (11) und der zweite Abschnitt (12) voneinander beabstandet sind, und der dritte Abschnitt (13) jeweils mit dem ersten Abschnitt (11) und dem zweiten Abschnitt (12) verbunden ist; wobei der erste Abschnitt (11), der zweite Abschnitt (12) und der dritte Abschnitt (13) elektrisch leitend sind, der erste Abschnitt (11), der zweite Abschnitt (12) und der dritte Abschnitt (13) elektrisch mit einer der Vielzahl von Zellen in dem Batteriemodul verbunden sind;
das zweite Element (2) einen Vorsprung (21) umfasst, der sich in Richtung des ersten Elements (1) erstreckt; der Vorsprung (21), betrachtet entlang der ersten Richtung (X), den dritten Abschnitt (13) mindestens teilweise überlappt;
entlang der ersten Richtung (X) der Vorsprung (21) und der dritte Abschnitt (13) mit einem Abstand voneinander beabstandet sind, die Schaltungsverbindungseinrichtung (100) zwischen dem Gehäuse (201) und der Zellbaugruppe (202) angeordnet ist, und das erste Element (1) und das zweite Element (2) so eingerichtet sind, dass sie sich einander nähern, wenn sich eine Zelle der Zellbaugruppe (2021) ausdehnt und gegen die Schaltungsverbindungseinrichtung (100) gedrückt wird, wobei der Vorsprung (21) so eingerichtet ist, dass er gegen den dritten Abschnitt (13) drückt oder von diesem gedrückt wird, um den dritten Abschnitt (13) zu durchtrennen; und
**dadurch gekennzeichnet, dass** das erste Element (1) ein erstes isolierendes Teil (14) und ein zweites isolierendes Teil (15) umfasst, der dritte Abschnitt (13) auf dem ersten isolierenden Teil (14) angeordnet ist, der erste Abschnitt (11) einen ersten Verbindungsabschnitt (111), der auf dem ersten isolierenden Teil (14) angeordnet ist, und einen ersten erstreckenden Abschnitt (112), der sich aus dem ersten isolierenden Teil (14) erstreckt, umfasst, und der zweite Abschnitt (12) einen zweiten Verbindungsabschnitt (121), der auf dem ersten isolierenden Teil (14) angeordnet ist, und einen zweiten erstreckenden Abschnitt (122), der sich aus dem ersten isolierenden Teil (14) erstreckt, umfasst; das erste isolierende Teil (14) und das zweite isolierende Teil (15) entlang der ersten Richtung (X) gestapelt sind und gemeinsam den ersten Verbindungsabschnitt (111), den zweiten Verbindungsabschnitt (121) und den dritten Abschnitt (13) festklemmen; wobei das erste isolierende Teil (14) und das zweite isolierende Teil (15) elektrisch isolierend sind;
wobei ein Ende des ersten Abschnitts (11) und ein Ende des zweiten Abschnitts (12) aus dem ersten isolierenden Teil (14) und dem zweiten isolierenden Teil (15) herausragt.

2. Batteriemodul (200) nach Anspruch 1, wobei die Schaltungsverbindungseinrichtung (100) ferner ein drittes Element (3) umfasst; und das dritte Element (3) entlang der ersten Richtung (X) zwischen dem ersten Element (1) und dem zweiten Element (2) angeordnet ist.

3. Batteriemodul (200) nach Anspruch 2, wobei ein erstes Loch (31) am dritten Element (3) vorgesehen ist; und
der Vorsprung (21), betrachtet entlang der ersten Richtung (X), sich mindestens teilweise in dem ersten Loch (31) befindet, und das erste Loch (31) so eingerichtet ist, dass es ermöglicht, dass der Vorsprung (21) durch das erste Loch (31) hindurch verläuft und den dritten Abschnitt (13) berührt, wenn das erste Element (1) einer einwirkenden Kraft in Richtung des zweiten Elements (2) ausgesetzt ist und/oder wenn das zweite Element (2) einer einwirkenden Kraft in Richtung des ersten Elements (1) ausgesetzt ist.

4. Batteriemodul (200) nach Anspruch 1, wobei an mindestens einem des ersten isolierenden Teils (14) oder des zweiten isolierenden Teils (15) entlang der ersten Richtung (X) ein erstes Durchgangsloch (141, 151) vorgesehen ist, und der dritte Abschnitt (13) in dem ersten Durchgangsloch (141, 151) mindestens teilweise freiliegt; und
der Vorsprung (21), betrachtet entlang der ersten Richtung (X), sich in dem ersten Durchgangsloch (141, 151) befindet, und das erste Durchgangsloch (141, 151) so eingerichtet ist, dass es ermöglicht, dass der Vorsprung (21) durch das erste Durchgangsloch (141, 151) hindurch verläuft und den dritten Abschnitt (13) berührt, wenn das erste Element (1) einer einwirkenden Kraft in Richtung des zweiten Elements (2) ausgesetzt ist und/oder wenn das zweite Element (2) einer einwirkenden Kraft in Richtung des ersten Elements (1) ausgesetzt ist.

5. Batteriemodul (200) nach Anspruch 1, wobei das erste isolierende Teil (14) und das zweite isolierende Teil (15) ein elektrisch isolierendes Material umfassen.

6. Batteriemodul (200) nach einem der Ansprüche 1 bis 3, wobei ein Dornabschnitt (211) an einem Ende des Vorsprungs (21) angeordnet und in Richtung des ersten Elements (1) ausgerichtet ist.

7. Batteriemodul (200) nach einem der Ansprüche 2 bis 3, wobei das dritte Element (3) elastisch ist.

8. Batteriemodul (200) nach einem der Ansprüche 2 bis 3, wobei ein isolierendes Material auf einer Seite des dritten Elements (3) nahe dem ersten Element (1) angeordnet ist.

9. Batteriemodul (200) nach einem der Ansprüche 1 bis 8, wobei die Zellbaugruppe (202) eine Vielzahl von Zellen (2021) umfasst, wobei die Vielzahl von Zellen (2021) sequenziell entlang der ersten Richtung (X) gestapelt sind, und die Schaltungsverbindungseinrichtung (100) zwischen zwei benachbarten Zellen (2021) angeordnet ist.

10. Batteriemodul (200) nach einem der Ansprüche 1 bis 8, wobei die Zellbaugruppe (202) eine Vielzahl von Zellen (2021) umfasst, wobei die Vielzahl von Zellen (2021) sequenziell entlang der ersten Richtung (X) gestapelt sind, und die Schaltungsverbindungseinrichtung (100) zwischen einer Innenwand des Gehäuses (201) und der Zellbaugruppe (202) entlang der ersten Richtung (X) angeordnet ist.

11. Batteriemodul (200) nach einem der Ansprüche 1 bis 8, wobei die Zelle (2021) eine Pouch-Zelle ist.

12. Elektrische Vorrichtung, wobei die elektrische Vorrichtung das Batteriemodul (200) nach einem der Ansprüche 1 bis 11 umfasst.

## Revendications

1. Module de batterie (200), comprenant un boîtier (201), un ensemble de cellules (202) et un appareil de connexion de circuit (100), dans lequel l'ensemble de cellules (202) comprend une pluralité de cellules (2021) empilées séquentiellement selon une première direction (X), l'ensemble de cellules (202) étant logé dans le boîtier (201), dans lequel l'appareil de connexion de circuit (100) est électriquement connecté à l'ensemble de cellules (202), dans lequel l'appareil de connexion de circuit (100) comprend un premier élément (1) et un second élément (2) empilés séquentiellement selon la première direction (X) ; dans lequel :
le premier élément (1) comprend une première section (11), une deuxième section (12) et une troisième section (13) ; la première section (11) et la deuxième section (12) sont espacées l'une de l'autre, et la troisième section (13) est connectée séparément à la première section (11) et à la deuxième section (12) ; dans lequel la première section (11), la deuxième section (12) et la troisième section (13) sont électriquement conductrices, la première section (11), la deuxième section (12) et la troisième section (13) étant électriquement connectées à l'une de la pluralité de cellules dans le module de batterie ;
le second élément (2) comprend un bossage (21) s'étendant vers le premier élément (1); vu selon la première direction (X), le bossage (21) chevauche au moins partiellement la troisième section (13) ;
selon la première direction (X), le bossage (21) et la troisième section (13) sont espacés l'un de l'autre avec un jeu, l'appareil de connexion de circuit (100) étant disposé entre le boîtier (201) et l'ensemble de cellules (202), et le premier élément (1) et le second élément (2) étant configurés pour se rapprocher l'un de l'autre lorsqu'une quelconque cellule de l'ensemble de cellules (2021) se dilate et est pressée contre l'appareil de connexion de circuit (100), le bossage (21) étant configuré pour presser contre et être pressé par la troisième section (13) afin de fracturer la troisième section (13) ; et
**caractérisé en ce que** le premier élément (1) comprend une première partie isolante (14) et une seconde partie isolante (15), la troisième section (13) étant disposée sur la première partie isolante (14), la première section (11) comprenant une première portion de connexion (111) disposée sur la première partie isolante (14) et une première portion d'extension (112) s'étendant hors de la première partie isolante (14), et la deuxième section (12) comprenant une seconde portion de connexion (121) disposée sur la première partie isolante (14) et une seconde portion d'extension (122) s'étendant hors de la première partie isolante (14) ; la première partie isolante (14) et la seconde partie isolante (15) étant empilées selon la première direction (X) et serrant conjointement la première portion de connexion (111), la seconde portion de connexion (121) et la troisième section (13) ; la première partie isolante (14) et la seconde partie isolante (15) étant électriquement isolantes ;
une extrémité de la première section (11) et une extrémité de la deuxième section (12) faisant saillie hors de la première partie isolante (14) et de la seconde partie isolante (15).

2. Module de batterie (200) selon la revendication 1, dans lequel l'appareil de connexion de circuit (100) comprend en outre un troisième élément (3) ; et, selon la première direction (X), le troisième élément (3) est disposé entre le premier élément (1) et le second élément (2).

3. Module de batterie (200) selon la revendication 2, dans lequel un premier trou (31) est prévu sur le troisième élément (3) ; et
vu selon la première direction (X), le bossage (21) est situé au moins partiellement dans le premier trou (31), et le premier trou (31) est configuré pour permettre au bossage (21) de traverser le premier trou (31) et d'entrer en contact avec la troisième section (13) lorsque le premier élément (1) est soumis à une force agissant vers le second élément (2) et/ou lorsque le second élément (2) est soumis à une force agissant vers le premier élément (1).

4. Module de batterie (200) selon la revendication 1, dans lequel un premier trou traversant (141,151) est prévu sur au moins l'une de la première partie isolante (14) ou de la seconde partie isolante (15) selon la première direction (X), et la troisième section (13) est au moins partiellement exposée dans le premier trou traversant (141,151) ; et
vu selon la première direction (X), le bossage (21) est situé dans le premier trou traversant (141,151), et le premier trou traversant (141,151) est configuré pour permettre au bossage (21) de traverser le premier trou traversant (141,151) et d'entrer en contact avec la troisième section (13) lorsque le premier élément (1) est soumis à une force agissant vers le second élément (2) et/ou lorsque le second élément (2) est soumis à une force agissant vers le premier élément (1).

5. Module de batterie (200) selon la revendication 1, dans lequel la première partie isolante (14) et la seconde partie isolante (15) comprennent un matériau électriquement isolant.

6. Module de batterie (200) selon l'une quelconque des revendications 1 à 3, dans lequel une portion en pointe (211) est disposée à une extrémité du bossage (21) et orientée vers le premier élément (1).

7. Module de batterie (200) selon l'une quelconque des revendications 2 à 3, dans lequel le troisième élément (3) est élastique.

8. Module de batterie (200) selon l'une quelconque des revendications 2 à 3, dans lequel un matériau isolant est disposé sur un côté du troisième élément (3) proche du premier élément (1).

9. Module de batterie (200) selon l'une quelconque des revendications 1 à 8, dans lequel l'ensemble de cellules (202) comprend une pluralité de cellules (2021), la pluralité de cellules (2021) étant empilées séquentiellement selon la première direction (X), et l'appareil de connexion de circuit (100) étant disposé entre deux cellules adjacentes (2021).

10. Module de batterie (200) selon l'une quelconque des revendications 1 à 8, dans lequel l'ensemble de cellules (202) comprend une pluralité de cellules (2021), la pluralité de cellules (2021) étant empilées séquentiellement selon la première direction (X), et l'appareil de connexion de circuit (100) étant disposé entre une paroi interne du boîtier (201) et l'ensemble de cellules (202) selon la première direction (X).

11. Module de batterie (200) selon l'une quelconque des revendications 1 à 8, dans lequel la cellule (2021) est une cellule en poche.

12. Dispositif électrique, dans lequel le dispositif électrique comprend le module de batterie (200) selon l'une quelconque des revendications 1 à 11.
